Europäisches Patentamt

European Patent Office

Office européen des brevets

(11) Veröffentlichungsnummer: **0 024 634**

**A1**

# (12) EUROPÄISCHE PATENTANMELDUNG

(21) Anmeldenummer: **80104783.8**

(22) Anmeldetag: **13.08.80**

(51) Int Cl.³: **E 01 C 19/10**

(30) Priorität: **16.08.79 DE 2933019**

(43) Veröffentlichungstag der Anmeldung:
**11.03.81 Patentblatt 81 10**

(84) Benannte Vertragsstaaten:
**CH FR GB IT LI**

(71) Anmelder: **Alfelder Eisenwerke Carl Heise Kom.-Ges.
vorm. Otto Wesselmann & Cie
Hannoversche Strasse 7
D-3220 Alfeld(DE)**

(72) Erfinder: **Ziegenbein, Rolf
Am Mühlenberg 4
D-3220 Alfeld (Leine)(DE)**

(74) Vertreter: **Patentanwälte Dipl.-Ing. Rudolf Bibrach
Dipl.-Ing. Elmar Rehberg
Postfach 738
D-3400 Göttingen(DE)**

(54) **Verfahren und Vorrichtung zum Abreinigen der Rauchgase einer Aufbereitungsanlage für bituminöses Mischgut.**

(57) Bei Aufbereitungsanlagen für bituminöses Mischgut, die mit einer befeuerten Drehtrommel zum Aufheizen und zum Untermischen des thermoplastischen Bindemittels dienen, besteht die Notwendigkeit, die Rauchgase zu reinigen. Bekanntlich werden für diesen Zweck Zyklone und eine nachgeschaltete Naßentstaubung eingesetzt. Die Nachschaltung einer Filterentstaubung mit Filtertüchern ist problematisch. Es besteht daher die Aufgabe, die Rauchgase einer Aufbereitungsanlage für bituminöses Mischgut abzureinigen und die Abreinigung an das jeweilige Mischgut anzupassen.

Erfindungsgemäß wird aus einem Teil der ohnehin bei der Rezeptur des bituminösen Mischgutes einzusetzenden Mineralien ein Schüttgutfilter (11) gebildet, den dieser Teil der Mineralien durchlauft, bevor er selbst zusammen mit den anderen Mineralien in der Drehtrommel (8) aufgeheizt und Bestandteil des bituminösen Mischbutes wird. Da die Mineralien, die den Schuttgutfilter (11) passieren, die aus den Rauchgasen zu entfern-enden Stoffe auf ihrer Oberfläche aufnehmen, gelangen diese Stoffe mit den Mineralien zu bituminösem Mischgut verarbeitet in das Endprodukt, wo sie keineswegs stören. Die in einen Kamin od. dgl. abgegebenen Rauchgase sind aber auf jeden Fall abgereinigt und damit umweltfreundlich gesäubert.

Fig 1

Croydon Printing Company Ltd

- 1 -

Die Erfindung bezieht sich auf ein Verfahren zum Abreinigen der Rauchgase einer Aufbereitungsanlage für bituminöses Mischgut mit einer befeuerten Drehtrommel, der die Mineralien und das thermoplastische Bindemittel zugeführt und von der das Mischgut und die Rauchgase abgezogen werden. Die Erfindung zeigt gleichzeitig eine Vorrichtung zur Durchführung des Verfahrens.

Die DE-OS 27 25 337 zeigt eine Aufbereitungsanlage für bituminöses Mischgut, bei der zwei konische, jeweils angetriebene Drehtrommeln Verwendung finden, die unterschiedliche Durchmesser aufweisen und einander umgebend mit gleicher Achse angeordnet sind. Der inneren Drehtrommel ist ein Brenner zugeordnet. Die Mineralien werden im Gegenstromverfahren in dieser inneren Drehtrommel aufgeheizt, wobei auch infolge der Verwendung der feineren Mineralien eine beachtliche Staubentwicklung zu erwarten ist. Die Rauchgase werden aus der inneren konischen Drehtrommel abgezogen und in ein Gehäuse abgegeben, welches die äußere konische Drehtrommel umgibt. Am Übergang zwischen der inneren und der äußeren Drehtrommel werden Füller und Bindemittel gemeinsam aufgegeben, so daß an dieser Stelle die erhitzten Mineralien, der Füller und das Bindemittel gemeinsam vermischt werden. Da die Mineralien im Gegenstromverfahren erhitzt werden, besteht keine Möglichkeit, die Stäube durch das Bindemittel zu binden, da sie durch das Rauchgas ausgetragen werden und keine Gelegenheit haben, mit dem Bindemittel in Berührung zu kommen. Eine Abreinigung der Rauchgase findet gemäß DE-OS 27 25 337 nicht statt.

Eine ähnliche Aufbereitungsanlage für bituminöses Mischgut, jedoch nur unter Verwendung einer einzigen Drehtrommel, ist aus der CH-PS 567 628 bekannt. Dabei werden die Mineralien aus entsprechenden Silos mit einer Abzugseinrichtung abgezogen. Sie werden zusammen mit dem
Bitumen und ggf. Wasser in die Drehtrommel geleitet, die
von der einen Stirnseite her bekannterweise durch einen
Brenner beheizt wird. Durch spezielle Einbauten in der
Drehtrommel wird ein kaskadenförmiger Durchsatz des Mischgutes erreicht. Das Mischgut wird dabei im Gleichstrom von
den Rauchgasen und über die Strahlungswärme der offenen
Flamme des Brenners erwärmt. Eine Abreinigung der Rauchgase wird nicht beschrieben.

In der Praxis ist es bekannt, die Rauchgase einer Aufbereitungsanlage der eingangs beschriebenen Art dadurch
abzureinigen, daß sie zunächst durch ein Zyklon geleitet
und danach einer Naßentstaubung zugeführt werden, bevor
sie in einen Kamin, Schacht od. dgl. gelangen. Dabei ergeben sich rußige, ölige Ablagerungen auf der Wasseroberfläche, deren Beseitigung problematisch ist. Die Nachschaltung einer Filterentstaubung mit Filtertüchern ist
nicht ratsam, da Verklebungen der Filtertücher durch Ölnebel und Bitumendämpfe zu erwarten sind. Hierdurch wird
die Filteranlage so geschädigt, daß sie ausfällt.

Der Erfindung liegt die Aufgabe zugrunde, ein Verfahren
zum Abreinigen der Rauchgase einer Aufbereitungsanlage der
eingangs beschriebenen Art für bituminöses Mischgut aufzuzeigen und eine dafür geeignete Vorrichtung zu entwickeln, die in besonderer Weise der Aufbereitung von
bituminösem Mischgut mit Hilfe einer befeuerten Drehtrommel angepaßt ist. Dabei soll es möglich sein, die
Abreinigung an das jeweilige Mischgut anzupassen.

Erfindungsgemäß wird dies dadurch erreicht, daß aus einem
Teil der Mineralien ein Schüttgutfilter gebildet wird und die Rauchgase aus der Drehtrommel durch dieses Schüttgutfilter gezogen werden, bevor die emissionsbeladenen
Mineralien des Schüttgutfilters der Drehtrommel zugeführt werden. Die Erfindung geht damit von dem Gedanken
aus, einen Teil der Mineralien, die zur Herstellung des
Mischgutes sowieso benötigt wird, als Schüttgut für einen
Filter zu benutzen und ihn anschließend der Drehtrommel
in beladenem Zustand zuzuführen, so daß er in das Mischgut eingeht. Reststäube wie auch Öl- und Bitumendämpfe
lagern sich so in dem Schüttgutfilter ab und gelangen
über die Drehtrommel in das Mischgut, so daß das Schüttgutfilter laufend hinsichtlich seines Filterkörpers
Mineralien erneuert werden kann. Gleichzeitig wird damit
die Temperatur der Rauchgase erniedigt bzw. die durch das
Schüttgutfilter geleiteten Mineralien aufgeheizt, so daß
eine Wärmeausnutzung stattfindet.

Mit besonderem Vorteil wird das Schüttgutfilter kontinuierlich betrieben, indem ein Teil der Mineralien
kontinuierlich durch das Schüttgutfilter geleitet wird.
Auf diese Weise ist sichergestellt, daß jeweils frisches
Filtermaterial zur Verfügung steht und der Filter damit
eine optimale Wirksamkeit besitzt. Das Schüttgutfilter
wird j-e nach den Betriebszuständen und der gewünschten
Abreinigung mit Mineralien wechselnder Körnung betrieben.
Es versteht sich, daß eine besonders gute und schnelle
Anpassung bei diesem kontinuierlichen Betrieben stattfindet. Es kann dabei sogar auf Anfahrzustände Rücksicht
genommen werden. Auch der Temperaturverlauf innerhalb
der Drehtrommel kann auf diese Weise beeinflußt werden,
indem der Widerstand des Schüttgutfilters und der Abreinigungsgrad durch die jeweils wechselnde Körnung mit
beeinflußt wird.

- 4 -

Zwecks Wiedergewinnung der Verdampfungswärme des Wassers wird der Taupunkt im Schüttgutfilter unterschritten. Damit gelingt es, die Verdampfungswärme rückzugewinnen. Am Schüttgutfilter wird lediglich Wasser ausgeschieden.

Die Fließgeschwindigkeit der Mineralien im Schüttgutfilter kann an die Fließgeschwindigkeit der Mineralien in der Drehtrommel angepaßt werden, so daß der Verfahrensablauf des Filterns mit dem Verfahrensablauf der Herstellung des Mischgutes innig vereinigt wird.

Eine Vorrichtung, die zur Durchführung des Verfahrens geeignet ist, kennzeichnet sich erfindungsgemäß dadurch, daß ein in etwa vertikal angeordneter Schacht zur Aufnahme der das Filtermaterial bildenden Mineralien vorgesehen ist, -der oben eine Aufgabeeinrichtung und unten eine Abzugseinrichtung aufweist, die mit den übrigen Teilen der Aufbereitungsanlage durch Fördermittel verbunden sind. Die in etwa vertikaler Anordnung des Schachtes eignet sich insbesondere bei kontinuierlichem Betrieb bzw. kontinuierlicher Erneuerung der Mineralien im Schüttgutfilter.

Der vertikale Schacht kann im Bereich seiner Aufgabeeinrichtung und/oder seiner Abzugseinrichtung je eine Querschnittsverengung aufweisen, so daß ein nachgeschalteter Ventilator die Rauchgase im wesentlichen aus der Drehtrommel durch das Schüttgutfilter zieht. Der in etwa vertikale Schacht weist einen sich in Fließrichtung zweckmäßig erweiterten Querschnitt auf, um Verstopfungen während des kontinuierlichen Betriebes entgegenzuwirken.

Mit der Erfindung werden verschiedene Vorteile erreicht. Kostspielige Instandsetzungsarbeiten von Korrosionsschäden an Naßabschneidern entfallen. Das Filtermedium, nämlich die Mineralien, stehen ständig kostenlos für diesen zweiten Verwendungszweck zur Verfügung. Stäube, Ölnebel und Bitumdämpfe entweichen nicht mehr in die Atmosphäre, sondern werden, insbesondere bei Taupun-ts-unterschreitung, günstig niedergeschlagen und mit dem kontinuierlich erneuerten Filterkörper der Drehtrommel wieder zugeleitet. Bei Taupunktsunterschreitung infolge der sich bildenden Feuchtigkeit wird auch eine besonders effektive Niederschlagung der Reststäube erzielt. Die Wärmeausnutzung ist wesentlich verbessert, da die Mineralien, die über den Schüttgutfilter laufen, hier bereits vorgewärmt werden.

Die Erfindung wird anhand der Zeichnungen weiter erläutert. Es zeigen:

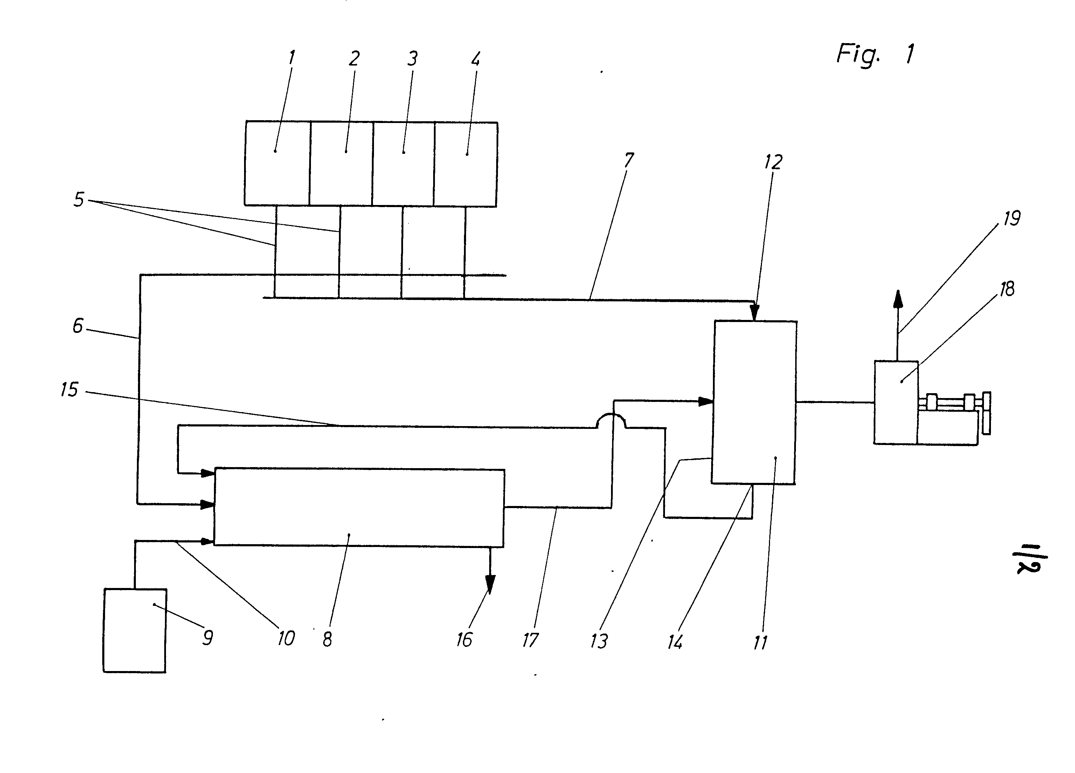

Fig. 1     ein schematisiertes Fließschaltbild der wesentlichen Teile der Aufbereitungsanlage    und

Fig. 2     eine schematisierte Seitenansicht des Schüttgutfilters.

Bei der Herstellung von bituminösem Mischgut werden üblich-erweise verschiedene Mineralien, auch in verschiedenen Korngrößen und Fraktionen eingesetzt, die beispielhaft in den vier Behältern 1, 2, 3, 4 zur Verfügung stehen. Über Förderbänder 5 gelangen diese einzelnen Mineralien je nach der gewünschten Rezeptur teilweise auf eine Förderstrecke 6 und teilweise auf eine Förderstrecke 7. Die Förderstrecke 6 führt direkt zur Drehtrommel 8. Aus einem Vorratsbehälter 9 wird Bitumen über die Förderstrecke 1o der Drehtrommel 8 zugeleitet.

- 6 -

Ein Teil der aus den Behältern 1, 2, 3, 4 abgezogenen Mineralien gelangt über die Förderstrecke 7 in das Schüttgutfilter 11, wobei es an einer Aufgabeeinrichtung 12 eintritt, einen im wesentlichen abwärts gerichteten Schacht 13 passiert, der an zwei gegenüberliegenden Seiten, flächendurchlässig für die Rauchgase ist, und über eine Abzugeinrichtung 14 aus dem Schüttgutfilter 11 herausgelangt. Von dort gelangt dieses emissionsbeladene Mineral über die Förderstrecke 15 in die Drehtrommel 8, so daß es hier zusammen mit den anderen Komponenten zu dem Mischgut verarbeitet wird, welches die Drehtrommel am Ende gemäß Pfeil 16 verläßt.Die Rauchgase der Drehtrommel gelangen über die Leitung 17 zu dem Schüttelgutfilter 11 bzw. werden von einem Ventilator 18 durch das Schüttgutfilter 11 abgezogen und gemäß Pfeil 19 gereinigt in die Atmosphäre abgelassen.

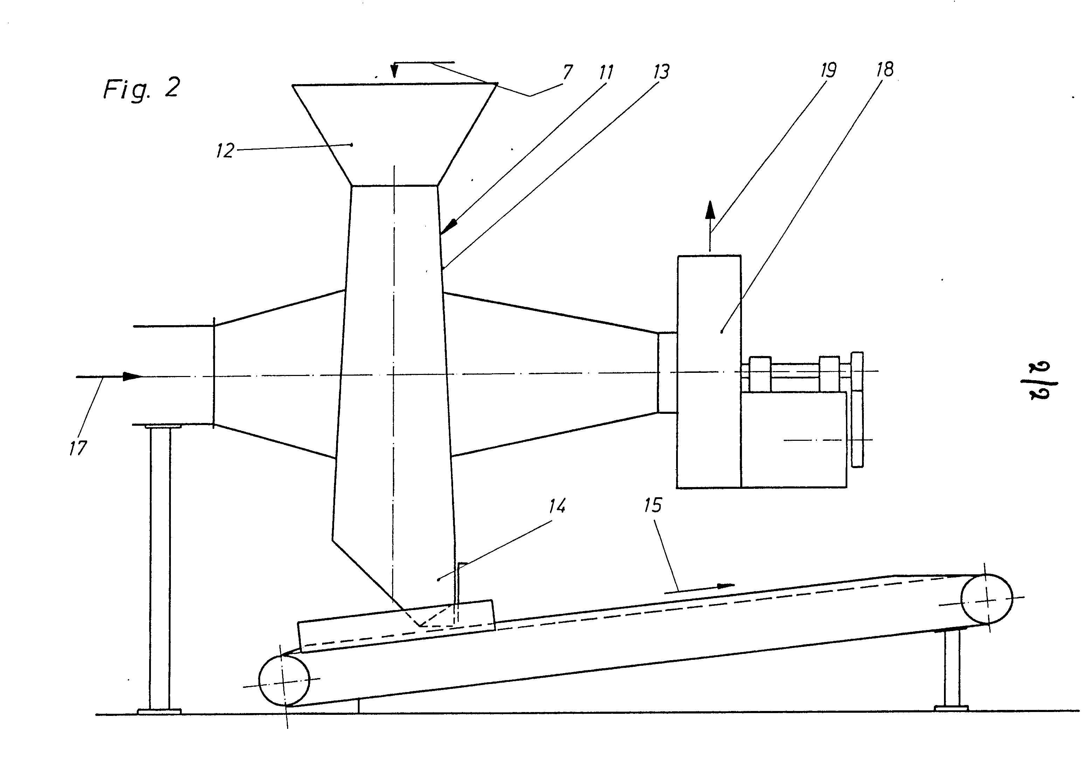

Fig. 2 zeigt noch einmal schematisiert in vergrößernder Darstellung das Ende der Anlage bzw. den Schüttgutfilter 11 mit seinem im wesentlichen senkrecht angeordneten abwärts führenden Schacht 13, der sich erweiternden Querschnitt besitzt. Über die Förderstrecke 7 gelangt kontinuierlich Mineral in den Schacht 13, wobei er die Aufgabe, einrichtung 12 passiert, die als Doppelklappenaufgabe oder als Zellenradbeschickung od. dgl. ausgebildet sein kann. Die aus der Drehtrommel 8 vermittels des Ventilators 18 abgezogenen Rauchgase gelangen über die Leitung 17 durch das Schüttgutfilter hindurch und werden dort gereinigt. Reststäube, Öl- und Bitumendämpfe schlagen sich an den Mineralien nieder und werden über die Abzugseinrichtung 14 der Förderstrecke 15 übergeben, die zu dem Eingang der Drehtrommel 8 führt.

Der Durchsatz des Teils der Mineralien, die aus den Behältern 1, 2, 3, 4 zur Bildung des Schüttgutfilters abgezogen werden, kann in seiner Körnung den wechselnden Betriebsbedingungen beim Anfahren und beim kontinuierlichen Betrieb und auch den verschiedenen Mischungsrezepturen mit dem erforderlichen Abreinigungsgrad angepaßt werden. Auch der Widerstand des Schüttgutfilters 11 wird durch die Wahl der entsprechenden Mineralien bestimmt. Damit kann auf den Temperaturverlauf in der Drehtrommel 8 Einfluß genommen werden.

**BIBRACH & REHBERG**

ANWALTSSOZIETÄT

0024634

BIBRACH & REHBERG, POSTFACH 738, D-3400 GÖTTINGEN

PATENTANWALT DIPL.-ING. RUDOLF BIBRACH
PATENTANWALT DIPL.-ING. ELMAR REHBERG

RECHTSANWÄLTIN MICHAELA BIBRACH-BRANDIS

TELEFON: (0551) 45034/35
TELEX: 96616 bipat d
POSTSCHECKKONTO: HANNOVER
(BLZ 25010030) NR. 115763-301
BANKKONTEN:   DEUTSCHE BANK AG GÖTTINGEN
(BLZ 26070072) NR. 01/85900
COMMERZBANK GÖTTINGEN
(BLZ 26040030) NR. 6425722

IHR ZEICHEN
YOUR REF.

IHR SCHREIBEN VOM
YOUR LETTER

UNSER ZEICHEN
OUR REF.

A 115/n5

D-3400 GÖTTINGEN,
PÜTTERWEG 6

31.o7.1979

Alfelder Eisenwerke Carl Heise KG
vorm. Otto Wesselmann & Cie., 322o Alfeld


Verfahren und Vorrichtung zum Abreinigen der Rauchgase einer Aufbereitungsanlage für bituminöses Mischgut


P a t e n t a n s p r ü c h e :


1. Verfahren zum Abreinigen der Rauchgase einer Aufbereitungsanlage für bituminöses Mischgut mit einer
befeuerten Drehtrommel, der die Mineralien und das
thermoplastische Bindemittel zugeführt und von der
das Mischgut und die Rauchgase abgezogen werden, dadurch gekennzeichnet, daß aus einem Teil der Mineralien ein Schüttgutfilter gebildet wird und die
Rauchgase aus der Drehtrommel durch dieses Schüttgutfilter gezogen werden, bevor die emissionsbeladenen Mineralien des Schüttgutfilters der Drehtrommel zugeführt werden.

2. Verfahren nach Anspruch 1, dadurch gekennzeichnet, daß das Schüttgutfilter kontinuierlich betrieben wird, indem ein Teil der Mineralien durch das Schüttgutfilter geleitet wird.

3. Verfahren nach Anspruch 1 und 2, dadurch gekennzeichnet, daß das Schüttgutfilter je nach den Betriebszuständen und der gewünschten Abreinigung mit Mineralien wechselnder Körnung betrieben wird.

4. Verfahren nach Anspruch 1 bis 3, dadurch gekennzeichnet, daß zwecks Wiedergewinnung der Verdampfungswärme des Wassers der Taupunkt im Schüttgutfilter unterschritten wird.

5. Verfahren nach Anspruch 1 bis 4, dadurch gekennzeichnet, daß die Fließgeschwindigkeit der Mineralien im Schüttgutfilter an die Fließgeschwindigkeit der Mineralien in der Drehtrommel angepaßt wird.

6. Vorrichtung zur Durchführung des Verfahrens nach Anspruch 1 bis 5, dadurch gekennzeichnet, daß ein in etwa vertikal angeordneter Schacht (13) zur Aufnahme der das Filtermaterial bildenden Mineralien vorgesehen ist, der oben eine Aufgabeeinrichtung (12) und unten eine Abzugseinrichtung (14) aufweist, die mit den übrigen Teilen der Aufbereitungsanlage durch Fördermittel (7, 15, 17) verbunden sind.

7. Vorrichtung nach Anspruch 6, dadurch gekennzeichnet, daß der in etwa vertikale Schacht (13) im Bereich seiner Aufgabeeinrichtung (12) eine Querschnittverengung aufweist.

8. Vorrichtung nach Anspruch 6, dadurch gekennzeichnet, daß der in etwa vertikale Schacht (13) im Bereich seiner Abzugseinrichtung (14) eine Querschnittsverengung aufweist.

9. Vorrichtung nach Anspruch 6 bis 8, dadurch gekennzeichnet, daß der in etwa vertikale Schacht (13) sich in Fließrichtung erweiternden Querschnitt aufweist.

Fig. 1

0024634

Fig. 2

2/2

0024634

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 4 144 359 (K. ZAHEDI et al.) <br> * ganzes Dokument * <br> -- | 1,2, 6-8 |
| | FR - A1 - 2 376 682 (E. MUNTZER et al.) <br> * Seite 2, Zeile 17 bis Seite 7 * <br> -- | 1 |
| | US - A - 4 136 964 (G.W. SWISHER JR.) <br> * Spalte 7, Zeile 23 bis Spalte 8, <br>  Zeile 24 * <br> -- | 1,3 |
| A | US - A - 4 103 350 (J.D. BROCK et al.) <br> * Spalte 2, Zeilen 25 bis 45 * <br> -- | |
| A | FR - A - 2 062 415 (H. EGGERATH) <br> * Seite 7, Zeile 32 bis Seite 8, <br>  Zeile 1 * <br> -- | |
| P,A | DE - A1 - 2 931 367 (WIBAU INDUSTRIE <br> UND VERWALTUNG GMBH) <br> * Seite 11, letzter Absatz bis Seite <br>  18 * <br> ---- | |

**KLASSIFIKATION DER ANMELDUNG (Int.Cl.3)**

E 01 C 19/10

**RECHERCHIERTE SACHGEBIETE (Int. Cl.3)**

B 01 D 46/00

E 01 C 19/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort <br> Berlin | Abschlußdatum der Recherche <br> 20-11-1980 | Prüfer <br> PAETZEL |
|---|---|---|

EPA form 1503.1   06.78